# EUROPÄISCHE PATENTSCHRIFT

(11) **EP 1 232 205 B1**
(45) Veröffentlichungstag und Bekanntmachung des Hinweises auf die Patenterteilung: **17.09.2008**
(21) Anmeldenummer: 00984853.2
(22) Anmeldetag: 21.10.2000
(51) Int. Cl.: C08J 11/18, C08C 19/08

(54) **DEVULKANISAT AUS GUMMIABFÄLLEN, DEVULKANISATCOMPOUND, VERFAHREN ZU DEREN HERSTELLUNG UND VERWENDUNG ZUM WIEDEREINSATZ IN FRISCHMISCHUNGEN UND ZUR HERSTELLUNG VON SPRITZGUSSFORMTEILEN**
DEVULCANISATION PRODUCT CONSISTING OF SCRAP RUBBER, A DEVULCANISATION COMPOUND, A METHOD FOR PRODUCING SAME, THE REUSE THEREOF IN FRESH MIXTURES AND THE USE THEREOF FOR PRODUCING INJECTION MOULDED PARTS
PRODUIT DE DEVULCANISATION CONSTITUE DE DECHETS DE CAOUTCHOUC, COMPOSITE A BASE DE PRODUIT DE DEVULCANISATION, LEUR PROCEDE DE PRODUCTION, LEUR REUTILISATION DANS DE NOUVEAUX MELANGES ET LEUR UTILISATION DANS LA PRODUCTION DE PIECES MOULEES PAR INJECTION

(30) Priorität: 22.10.1999 DE 19950965
(43) Veröffentlichungstag der Anmeldung: 21.08.2002
(73) Patentinhaber: KET Kunststoff- und Elasttechnik GmbH Liegau-Augustusbad, 01465 Liegau-Augustusbad (DE); Krieg, Gerhard, 27243 Kirchseelte (DE)
(72) Erfinder: ALSDORF, Peter, 01454 Radeberg (DE); KRIEG, Reinhard, 03222 Lübbenau/Spreewald (DE); WENSKE, Günther, 01465 Liegau-Augustusbad (DE)
(74) Vertreter: Uhlemann, Henry
(86) Internationale Anmeldenummer: PCT/DE2000/003734
(87) Internationale Veröffentlichungsnummer: WO 2001/029121

(56) Entgegenhaltungen:
- EP-A- 0 690 091
- EP-A- 0 773 230
- GB-A- 2 183 663
- US-A- 3 957 737
- US-A- 4 201 732
- US-A- 4 305 850
- DATABASE WPI Section Ch, Week 197943 Derwent Publications Ltd., London, GB; Class A12, AN 1979-77985B XP002162755 & JP 54 117594 A (TOYO RUBBER IND CO LTD), 12. September 1979 (1979-09-12)

## Beschreibung

Die Erfindung betrifft ein Devulkanisat aus Abfällen vulkanisierten Gummis unterschiedlicher Elastomerbasis, daraus hergestellte Devulkanisatcompounds, Verfahren zu deren Herstellung, sowie die Verwendung von Devulkanisat für den Einsatz in Frischmischungen und das Devulkanisatcompound zur Herstellung von Spritzguß-Gummiformteilen.

Für die Devulkanisation von Gummiabfällen werden bisher unterschiedliche Wirkmechanismen und Kombinationen dieser, wie Temperatureinwirkung (thermischer Abbau der Kautschukmolekülketten), Sauerstoff- bzw. Ozoneinwirkung (oxydativer Abbau), mechanische Einwirkung wie durch starke Scher, Druck- und Reißkräfte (mechanischer Abbau) und der Wirkung von Chemikalien (chemisch-reduktiver Abbau) zur Anwendung gebracht. Es handelt sich in jedem Einzelfall um Zuführung von Energie in verschiedenster Form zur Spaltung der Kautschuk- und Schwefelbrücken. Jedoch tritt bei allen bisher bekannten Verfahren, neben der Brechung der mono- bzw. bisulfidischen Vernetzungsbrücken des Gummis, auch eine starke Crackung der C-C-Bindungen der Makromoleküle des Kautschuks auf, was zwangsläufig eine Veränderung der physikalischen und chemischen Parameter des Ausgangsvulkanisates ergibt.

JP 54 117594 A offenbart ein Herstellungsverfahren für Recycling-Gummi, bei dem ein Gemisch aus zerkleinertem Gummimehl, Thiophenol, Butylamin und Recyclingöl gebildet wird. Dieses Gemisch behandelt man im Autoklaven unter einem Dampfdruck von 4 Bar und einer Temperatur von 120 - 220°C. Anschließend wird das Syntheseprodukt bei Zimmertemperatur getrocknet und anschließend dünn ausgewalzt. Dieser Verfahrensprozeß führt zu einer durchgehenden Aufquellung des zerkleinerten Gummimehles. Der Devulkanisationsprozeß erfolgt durchgehend und nicht nur an der Oberfläche der Gummipartikel. Durch die Verpressung kann dieses Material nicht im Spritz-Gießverfahren verarbeitet werden.

Die Aufgabe der Erfindung besteht in der Herstellung eines Devulkanisates sowie eines Devulkanisatcompounds aus Gummiabfällen, die sich für eine Weiterverarbeitung zu neuen Produkten ohne nennenswerten Werteverlust eignen.

**Erfindungsgemäß wird die Aufgabe durch ein Devulkanisat aus zerkleinerten Gummiabfällen gemäß der Merkmale nach Anspruch 1 bis 4 und daraus hergestelltem Devulkanisatcompound gemäß der Merkmale nach Anspruch 5 gelöst,** bei denen die zerkeinerten Gummiabfälle (Mehle, Granulate usw.) an ihrer Oberfläche schonend devulkanisiert und damit für eine neue Vulkanisation wieder aktiviert sind. Unter Beibehaltung der Länge der Makromoleküle der Elastomerbasis des Gummis sowie der

Eigenschaften des Ausgangsmaterials sind die poly, bi- oder monosulfidischen Schwefelbrücken der Kautschukmatrix der Oberfläche der zerkleinerten Gummiabfälle gebrochen und für eine neue Vulkanisation aktiviert.

In einer weiteren vorteilhaften Ausgestaltung der Erfindung sind die schonend an der Oberfläche devulkanisierten, zerkleinerten Gummiabfälle mit einem Sauerstoffradikalspender, z. B. in der Gummiindustrie gebräuchlichen Peroxiden zusätzlich aktiviert. Dieser ergänzend wirkende oder parallel ablaufende Aktivierungsprozeß, der auf die in der Kautschukmatrix noch vorhandenen Doppelbindungen abzielt, schafft weitere Vernetzungsstellen für eine intensivere Neuvemetzung und gewährleistet damit eine höchstmögliche Phasenanbindung des Gummikornes an eine Frischmischung bzw. an unterschiedliche Bindematerialien im Devulkanisatcompound. Die Entstehung einer schwachen beschleunigungs- und vernetzungsmittelarmen Anbindungsphase wird damit ausgeschlossen und ein hohes physikalisches Werteniveau gesichert.

Bei zusätzlich mit einem Sauerstoffradikalspender aktivierten und devulkanisierten, zerkleinerten Gummiabfällen sind diese mit einem Radikalfänger, z. B. einem in der Gummiindustrie gebräuchlichem Alterungsschutzmittel (ASM) versehen. Damit wird ein Verzögerungeffekt in der Vulkanisationskinetik erreicht.

Das zur Erfindung gehörende Devulkanisatcompound besteht aus einem Gemisch aus erfindungsgemäßem Devulkanisat, Vulkanisationsmittel, Bindemittel sowie gegebenenfalls technologischen Hilfsmitteln.
Als Vulkanisationsmittel wird Schwefel eingesetzt. Als Bindemittel werden Materialien, die der Kautschukbasis der Gummiabfälle entsprechen, verwandt. Z. B. wird für EPDM-Gummi als Bindemittel Gasphasen-EPDM und für NR/SBR-Gummi pulverförmiger NR/SBR-Kautschuk als Bindemittel eingesetzt.
Zur Erzielung von gezielten Vulkanisations- und Vulkanisateigenschaften werden spezielle Hilfsmittel zur Bindung von Restluft bzw. Feuchtigkeit, z. B. CaO und Ruß eingesetzt. Zur Erzielung von für den Spritzgießprozeß erforderlichen Fließeigenschaften werden Fließbarmacher, z. B. "Struktol EF 44 oder EF 66" oder Gelbildner, z. B. Kieselsäure und/oder Kaolin in Kombination mit Weichmacheröl (Paraffinöl) oder Zinkstearat eingesetzt.

Für die Erfindung werden schwefelvernetzte Gummiabfälle eingesetzt. Als Gummiabfälle können technisch/technologisch bedingte Gummiabfälle aber auch Ausschußgummiformteile, zu Granulat und Mehl aufbereitete Altreifen oder recycelter Altgummi verwendet werden.

**Erfindungsgemäß wird Devulkanisat und Devulkanisatcompound entsprechend der Merkmale der Ansprüche 6, 13 und 14 sowie deren vorteilhafte Ausgestaltungen entsprechend der Ansprüche 7 bis 11 hergestellt** Dabei wird die Gummistruktur der Gummikornoberfläche der zerkleinerten Gummiabfälle angequollen wird und die so vorbehandelten Gummiabfälle mit einem mechano-, chemisch-reduktiv wirkenden Devulkanisationsansatz in einer Heiz-Kühlmischer-Kombination gemischt, dabei bis auf eine Temperatur von 105 bis maximal 150°C erwärmt und danach sofort abgekühlt werden.

Zum Anquellen der Gummistruktur der Gummikornoberfläche werden Tallöl, an die bestehende Polarität der Elastomerbasis des Gummis anzupassende Weichmacheröle (wie Paraffinöl, aromatische, naphtenische Öle usw.) und/oder organische Säuren, z. B. Benzoesäure benutzt. Damit wird ein Auflockern der Gummistruktur an der Gummikornoberfläche und ein Eindringen der Chemikalien in den nachfolgenden Verfahrensstufen in eine Tiefe, die im Nanobereich liegt, ermöglicht.

Im Temperaturbereich von 105 bis 150°C erfolgt durch den Devulkanisationsansatz die Devulkanisation über einen chemisch-reduktiven Prozeß. Die Erwärmung erfolgt im wesentlichen durch prozeßbedingte Reibungswärme. Vorzugsweise wird bis zu einer Ausstoßtemperatur bis zu 135°C erwärmt. Um einen sich an die Devulkanisation anschließenden Vulkanisationsvorgang auszuschließen, wird der chemisch-reduktive Prozeß so geführt, daß die zerkleinerten Gummiabfälle den aktiven Temperaturbereich in einer kurzen Zeit durchlaufen.

Ein weiterer Prozeßweg ist ein parallel oder ergänzend zum vorgenannten Verfahren ablaufender Aktivierungsprozeß vorhandener Kautschukdoppelbindungen und Schwefelbindungen der Kautschukmatrix an der Gummikornoberfläche mittels aktivierend wirkender Chemikalien, wie Sauerstoffradikalspender. Dazu werden nach Mischung der zerkleinerten Gummiabfälle mit dem Devulkanisationsansatz diesem Gemisch Sauerstoffradikalspender und gegebenenfalls Radikalfänger zugegeben, bis zum Erreichen der Ausstoßtemperatur weitergemischt und danach die Mischung abgekühlt.

Verwendet wird vorzugsweise cryogen gemahlenes Gummimehl (alle Korngrößen sind möglich, auch Granulate).

Der Devulkanisationsansatz besteht aus einem Chemikaliengemisch aus Vulkanisationsaktivator, Vulkanisationsbeschleuniger, Vulkanisationsverzögerer und/oder gegebenenfalls Weichmacheröl.

Als Vulkanisationsaktivator bzw. Vulkanisationsbeschleuniger werden in der Gummiindustrie übliche Chemikalien eingesetzt, wie z. B. als Vulkanisationsbeschleuniger CBS, MBT/DPG, DCBS, Thiuram und als Vulkanisationsaktivator, z. B. Zinkoxid in Kombination mit Stearinsäure oder Zinkstearat.

Als Vulkanisationsverzögerer werden Tallöl oder organische Säuren, z. B. Benzoesäure verwendet.

Als Weichmacheröl bei EPDM-Abfällen wird Paraffinöl verwandt.

Als Sauerstoffradikalspender werden in der Gummiindustrie gebräuchliche Peroxide eingesetzt. Empfehlenswert ist eine Kombination mit einem Radikalfänger, z.B. Antioxidantien, Alterungsschutzmitel (ASM ) usw, aber nicht in jedem Fall Bedingung.

Die Herstellung des erfindungsgemäßen Devulkansiatcompounds erfolgt entweder in einer separaten, von der Herstellung des Devulkanisats getrennten zweiten Mischstufe, vorzugsweise auf der gleichen Anlage, oder in einem einstufigen Prozeß.

In einer zweiten Verarbeitungsstufe wird das Devulkanisat zu Devulkanisatcompound verarbeitet. Dazu werden Devulkanisat, Vulkanisationsmittel, Bindemittel sowie gegebenenfalls Hilfsmittel so mit einander vermischt, daß das Devulkanisatkom mit den Zusätzen gleichmäßig umschlossen wird.

Als Vulkanisationsmittel, Bindemittel sowie gegebenenfalls Hilfsmittel werden die oben aufgeführten Verbindungen eingesetzt.

Neben dem zweistufigen Verfahren ist auch eine einstufige Herstellung des Devulkanisatcompound möglich. Dazu werden beide Prozeßstufen Devulkanisationation und Compoundvermischung zusammengeführt und die eigentlichen Reaktionsprozesse, der Aktivierung und Devulkanisation, in den temperaturseitig fortschreitenden Vulkanisationsprozeß verlagert. Erfindungsgemäß werden die Gummistruktur der Gummikornoberfläche der zerkleinerten Gummiabfälle angequollen und danach die so vorbehandelten Gummiabfälle schichtweise durch Mischen mit Vulkanisationsbeschleuniger, Vulkanisationsaktivator, Vulkanisationsmittel, Hilfsmittel, Bindemitteln, Sauerstoffradikalspender und -fänger beschichtet.

Erfindungsgemäß wird ein, die Elastomerstruktur schonendes mechano/chemisch-reduktives oder ein die Elastomerstruktur schonendes mechano/chemisch-reduktives und aktivierendes Verfahren bei einer definierter Aktivierungstemperatur zur Herstellung der erfindungsgemäßen Devulkanisate angewandt. Die so hergestellten Devulkanisate sind an der Gummikornoberfläche devulkanisiert und aktiviert. Dieser Vorgang ist bei allen schwefelvernetzten Vulkanisaten möglich. Wesentlich ist, daß die physikalischen und chemischen Eigenschaften des Gummiausgangsmateriales erhalten bleiben, so daß ein Einmischen unter Einsatz der in der Gummiindustrie gebräuchlichen Mischtechnologien in Frischmischungen bis zu 50 %, ohne nennenswerten Verlust (unter 5 %) der physikalischen Parameter möglich ist.

Der Einsatz einer Heiz-Kühlmischerkombination sichert einen genau festlegbaren mechanolchemisch-reduktiven Vorgang mit definiertem Wärme-Energieeintrag zur Prozeßaktivierung, bei dem die Kautschukmatrix in ihrer Molekülkettenlänge vom Crackvorgang verschont bleibt.

Im Heiz-Kühlmischer erfolgt durch das Impuls-Verwirbelungsprinzip ein relativ sanfter, speziell definierter, mechanischer Einergieeintrag auf das Gummikorn, vor allem durch die Reibung der Teilchen untereinander bzw. beim Kontakt mit dem Rührwerkzeug. Hierdurch werden die chemisch-reduktiv bzw. aktivierend wirkenden und Schwefelbrücken brechenden Chemikalien in die Gummiteilchenoberfläche, in eine durch die Verfahrensparameter definiert steuerbare Eindringtiefe, eingearbeitet. Sie werden damit für die Aufgabe einer Devulkanisation zielgerichtet plaziert.
Durch den nachgeschalteten Kühlmischer ist die Temperatureinwirkung genau zeitmäßig steuerbar bzw. durch die sofortige, schnelle Abkühlung aus dem aktiven Temperaturbereich heraus, wird eine Anvulkanisation und ein möglicher Wärmestau ausgeschlossen.

Die Chemikalien werden bei diesem Prozeß aufgeschmolzen und damit homogen in der Mischung verteilt. Die im Prozeß kontinuierlich ansteigende Temperatur wird durch die Reibung der Partikel erzeugt. Der Mischer wird nur nach Prozeßende auf seine Starttemperatur heruntergekühlt, eine externe Wärmezufuhr ist nicht erforderlich bzw. durch ein auf die kookrete Maschine ausgerichtetes Arbeitsvolumen gesteuert. Um den chemisch - reduktiven Vorgang bevorzugt durchzuführen, ist eine Temperatur im Bereich von 105 - 135°C erforderlich. Das Material soll diesen aktiven Temperaturbereich vorzugsweise in 60 bis 240 Sekunden durchlaufen. Hierbei werden die Chemikalien in den aktiven und die Schwefelketten spaltenden Zustand versetzt. Die S - Kettenspaltung erfolgt, in dem die Schwefel- Brücken ehsmisch-reduktiv aufgebrochen werden und in dem sich die Beschleuniger mit ihren Spaltprodukten an die zwei S - Endungen der aufgebrochenen Brücke aktiv anlagern. Es handelt sich hierbei um Beschleuniger wie CBS, MBT/DPG, DCBS, Thiuram usw. Während einer normalen Vulkanisation spalten sie die Beschleuniger auf, brechen die Doppelbindungen des Elastomers und docken mit den S - Endungen der Spaltprodukte an die freien Valenzen des Kautschuks an. Im weiteren Verlauf der Vulkanisation vermitteln sie schnell die S - Vernetzung der Kautschukmakromoleküle, in dem sie sich wieder abspalten und den Schwefel schnell andocken lassen oder selbst an der Vernetzung teilnehmen.

Im Prozeß der Devulkanisation wird die chemische Aktivierungsenergie der Beschleuniger nur zum Brechen der S - Ketten ausgenutzt. Die Kohlenstoffbrücken der Elastomere bleiben hiervon unberührt.

Die Länge der Makromoleküle der Elastomerbasis des Gummis und damit auch die Eigenschaften des Ausgangsmaterials, d. h. der ursprünglichen Mischung, bleiben erhalten und geben die Sicherheit des Einbindens hoher Verschnittanteile, bis zu 50 % in der Frischmischung ohne nennenswerten Verlust der physikalischen Werte. Dies wird dadurch ermöglicht, daß eine unmittelbare Vernetzung zwischen Devulkanisat und der Frischmischungsstruktur erfolgt.

Bekannt ist, daß bei der Vulkanisation von Frischmischungen, denen unbehandeltes Gummimehl aus vulkanisierten Gummiabfällen zugemischt wurden, in den Mehlpartikeln durch die Temperatureinwirkung eine Weiter- oder Übervulkanisation stattfindet. Durch diesen Prozeß wird dem unmittelbar an die Gummikornoberfläche angrenzenden Bereich Schwefel und Beschleuniger entzogen und damit die Vernetzungsdichte stark reduziert. Demzufolge sind die physikalischen Parameter des Gesamtmaterials im Niveau gestört. Die Phasenanbindung zwischen dem Frischgummi/Binder und dem Mehlpartikel ist nicht ausreichend gewährleistet. Aus diesem Grund sind bisher nur sehr geringe Mengen an Gummimehl aus vulkanisierten Gummiabfällen in Frischgummimischungen ohne Eigenschaftsverlust zumischbar gewesen.

Durch Zusatz von Peroxid wird dem vorgenannten Prozeß entgegengewirkt. Dieses spaltet aktive Sauerstoffradikale ab. Im Zusammenwirken mit dem o.a. Devulkanisationsmechanismus werden vorhandene Doppelbindungen der Kautschukmatrix des Altgummis zusätzlich aktiviert und damit die Vernetzungsdichte gegenüber den bisher bekannten Verfahren deutlich erhöht und der voran beschriebene Vorgang unterbunden.
Die Formulierung des chemisch - reduktiven Prozesses ist wie folgt vorstellbar:

### CBS-Aufspaltung und Reaktion:

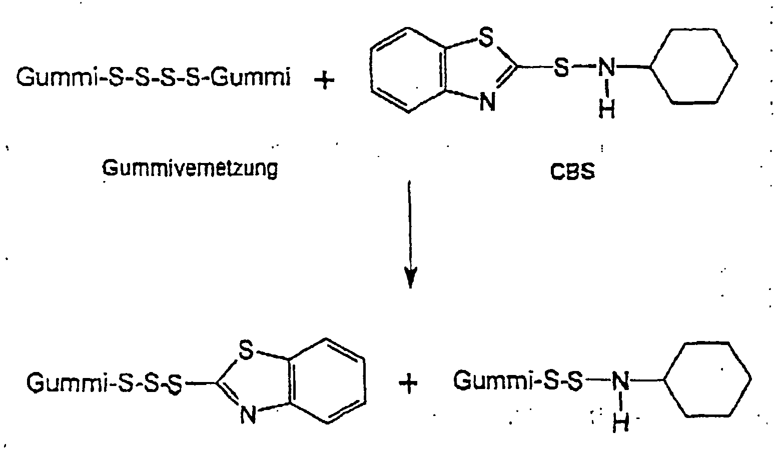

Bei CBS-Aufspaltung und Reaktion entstehen als Reaktionsprodukte ein gemischtes Disulfid und ein Sulfenamid. Es entstehen keine oxidationsempfindlichen Mercaptanverbindungen, was einen großen Vorteil darstellt, denn bis zu einer erneuten Vulkanisation wird der aktive Zustand, durch diese, einer Sauerstoffanlagerung entgegenwirkende Abbindung, erhalten.

Der Einsatz von Tallöl mit seinem hohen Harz- und Fettsäuregemischanteil und organischen Säuren (z. B. organische Säuren wie Carbonsäuren, Benzoesäure) in Kombination mit üblichen Weichmacherölen unterstützen den chemisch-reduktiven Spaltungsvorgang der Schwefelbrücken. Der Hatzsäureanteil wirkt bei der neuen Vulkanisation auf die Gummikornoberfläche vulkanisationskinetisch verzögernd, was von Bedeutung für die Anbindung an Frischmaterial ist. Es unterstützt Phasenanbindung von Gummikorn zu Bindematerial. Darüber hinaus besitzt dieses Öl eine hohe Klebrigkeit, welche einen schichtweisen, dem Prozeßablauf entsprechenden geordneten Auftrag der Chemikalien (Andockung) auf die Gummikornoberfläche ermöglicht. Weitere Prozeßöle (wie Paraffinöl, aromatische, naphtenische Öle usw.), die der bestehenden Polarität der Elastomerbasis des Gummis anzupassen sind, bewirken ein Auflockern der Gummistruktur an der Gummikornoberfläche. Hierdurch ist ein Eindringen der Chemikalien in eine Tiefe, die im Nanobereich liegt, ermöglicht. Dadurch kommt den Prozeßölen eine Schlepper- und Verteilerfunktion für die aktiven Beschleunigersubstanzen und dem Peroxid zu.

Eine weitere wichtige Komponente bei der Devulkanisation ist das Zinkoxid. ZnO ist eine aktivierende Komponente für die Beschleuniger, in Kombination mit der Stearinsäure im Verlauf des Devulkanisations- und im späteren Vulkanisationsprozeß.

Stearinsäure stellt in Kombination mit den Beschleunigern ein Reaktionspotential dar, welches eine verzögernde Rolle in der späteren Vulkanisation übernimmt, jedoch in der Reaktion mit dem Zinkweiß ergeben sich aktivierend wirkende Reaktionsprodukte. Ebenso bewirkt die Stearinsäure eine gute Füllstoffverteilung bzw. beim Spritzgießverfahren eine Verbesserung des Fließverhaltens.

Ruß, Kieselsäure und Kaolin sind zur Verbesserung des Rieselfähigkeit, zur Luft- und Feuchtigkeitsadsorption eingesetzt. Damit wird in den Vulkanisaten der Mikroporösität, die eine Werteniveauverschlechterung zur Folge hat, entgegengewirkt bzw. verhindert.

Eine Abnahme der Neuvulkanisationsintensität ist auf oxidative Vorgänge (Anlagerung von Sauerstoff an die aktiven freien Bindungen) zurückzuführen. Alterungsschutzmittel, die der oxidativen Gummialterung entgegenwirken, sind in diesem Prozeß von Vorteil und automatisch bei der Peroxid / ASM-Kombination gegeben. Bei cryogenen, gemahlenen Gummiabfällen ist dieses Mehl durch den noch längere Zeit in diesen vorhandenen Stickstoff weitestgehend gegenüber einem Sauerstoffangriff geschützt und die durch den mechanischen Mahlvorgang entstandenen aktiven Bindungsstellen sind ebenso gleichzeitig konserviert.

Die Verarbeitung des Devulkanisatcompounds kann auf normal ausgestatteten Gummispritzgießmaschinen erfolgen. Die Rieselfähigkeit des Materials gestattet die Zufuhr über Trichter mit Rührwerk. Der Vorteil der Anwendung des Spritzgießverfahrens liegt insbesondere darin, daß durch den Schneckeneinzug eine Materialvorverdichtung stattfindet und damit die, wie zum Beispiel bei der Anwendung des Preßverfahrens, nachteilig wirkende Luft aus dem Rohmaterial fast vollständig entfernt wird. Die verbleibende Restmenge wird durch Ruß gebunden.

Das erfindungsgemäße Devulkansisationscompound erlaubt erstmalig eine Verarbeitung von aufgearbeitetem Gummiabfallmaterial im Spritzgießverfahren. Dadurch sind Gummiformteile selbst mit komplizierten Geometrien in einem effektiven Vulkanisierverfahren herstellbar. Im Gegenteil zu dem bis jetzt bei der Verarbeitung von Gummiabfallmaterial angewendeten Preßverfahren für die Herstellung einfacher Gummiformteile wie Platten für Bodenbeläge und ähnlichen Teilen, bietet sich hier das Spritzgießverfahren sogar an, da bereits durch den Schneckeneinzug das Material vorverdichtet wird, damit der Luftgehalt im Devulkansisationscompound drastisch reduziert wird, was bei den bisherigen Gummiabfallmaterialien und im Preßverfahren nicht der Fall ist und somit zu Lufteinschlüssen und damit Qualitätsproblemen bei den Fertigteilen führt, da die bisher verarbeiteten Gummiabfallmaterialien keine oder nur geringe Fließfähigkeit besitzen und lediglich in ihrer Struktur zusammengepreßt werden. Der bei dem Spritzgießverfahren üblicherweise hohe Spritzdruck bewirkt eine weitere Verdichtung des erfindungsgemäßen Devulkanisatcompounds. Während des Spritzgießvorganges passiert das Devulkansisatcompound Material im Spritzgießwerkzeug das Angußverteilersystem und den sehr engen Anschnitt (Übergang vom Anguß zum eigentlichen Gummiformteil).

Im Bereich des Anschnittes erfährt, wie beim Spritzgießverfahren allgemein angewandt, das Material die höchste Verdichtung, eine sehr hohe Scherung und dadurch eine Erwärmung. Der Vulkanisationsvorgang beginnt schlagartig und wird durch die Temperatur des Werkzeuges über die Vulkanisierdauer abgeschlossen. Die Vulkanisationsgeschwindigkeit des Devulkansisationscompounds entspricht der Vulkanisationsgeschwindigkeit von Frischgummi. Das sehr gute Fließverhalten des Devulkansisationscompounds gewährleistet das exakte Ausfüllen der Werkzeugkavitäten, selbst kompliziertester Geometrien. Auf Grund seiner Kornstruktur des Devulkansisationscompounds bereiten Lufteinschlüsse im Vergleich zu Frischgummi im Spritzgießverfahren zur Herstellung von Gummiformteilen deutlich weniger Probleme. Die Haftung der Gummiformteile aus Devulkansisationscompound im Werkzeug ist geringer als bei Gummiformteilen aus Frischgummi, was die Entformbarkeit der Gummiformteile aus dem Werkzeug spürbar erleichtert. Zur Verarbeitung von Devulkansisationscompound können alle Spritzgießmaschinen und Spritzgießwerkzeuge, die zur Verarbeitung von Frischgummi üblicherweise zur Anwendung kommen, verwendet werden.

Der Spritzvorgang erfolgt unter hohem Druck (üblich ca. 190 bis 210 Mpa). Unter diesem Druck passiert im Spritzgießverfahren üblich, das Material im Teileanschnittbereich den, dem Devulkanisat angepaßten engen Spalt und erfährt damit eine sehr hohe Scherung. Diese Scherung insbesondere bewirkt bei dem Devulkanisatcompound die sehr gute Vernetzungsdichte zur Erreichung mittlerer bis hochwertiger Spezifikationen der Vulkanisate, vergleichbar mit denen von Frischmischungen.

Anhand nachfolgender Ausführungsbeispiele wird die Erfindung näher erläutert:

### Ausführungsbeispiel 1

| **Herstellungsvorschrift für Devulkanisat für die Herstellung von Devulkanisatcompound** | |
|---|---|
| **Ausgangsmaterial:** | technologische bedingte EPDM-Gummiabfälle |
| **Zerkleinerung, Partikeigröße:** | 0 bis 400 µm |
| **Devulkanisationschemikalien:** | CBS, Tallöl, Peroxid, Radikalfänger |
| **verwendete Mischvorrichtung:** | Heiz-Kühlmischerkombination (Fa. Hentschel) 200L Gesamt-volumen=160 L Nutzvolumen, 65,-kg Ansatzgewicht (ca. 0,65 Füllfaktor) |

### Devulkanisatrezepturen:

### Bestandteile (theor. Teile)

| | **Rezept 1** | **Rezept 2** |
|---|---|---|
| **Gummimehl (EPDM)** | 100,00 | |
| **Gummimehl (NR/SBR)** | | 100,00 |
| **Tallöl** | 6,00 | 14,00 |
| **Paraffinöl** | 5,00 | |
| **Benzoesäure** | 0,40 | |
| **Beschleuniger CBS** | 2,50 | 2,50 |
| **Zinkoxid** | 1,50 | 1,50 |
| **Stearinsäure** | 0,70 | 0,70 |

### Verfahrensablauf

keine Kühlung und Heizung einstellen
entsprechend der Ansatzmenge wird die Drehzahl eingestellt (Laboransatz 3000 U/Min; Produktionsansatz 600 U/Min)

| **Arbeitsschritte** | **Temp** | **Zeit** | **Bemerkungen** |
|---|---|---|---|
| 1. Gummimehl, Tallöl, Parraffinöl und Benzoesäure in den Heizmischer eingeben | 55°C | 0 Min. | |
| | | | |
| 2.Rühren mit Höchstgeschwindigkeit (600 bzw. 3000 U/Min.) | | | Reaktivitätsreduktion d. Gummikorns |
| | | | |
| 3. Zugabe von CBS, ZnO und Stearinsäure | bei 90°C | | |
| | | | |
| 4.Rühren mit Höchstgeschwindigkeit (600 bzw. 3000 U/Min.) | | | Devulkanisationsvorgang |
| | | | |
| 5. Ausstoß des Gemisches in den Kühlmischer | 135°C | 16 Min. | |
| | | | |
| 6. Abkühlung des Gemisches im Kühlmischer | | | Reaktionsabbruch der DV |
| | | | |
| 7. Ausstoß | 45°C | 8 Min. | |
| | | | |
| **Gesamtmischzeit** | | **24Min** | |

### Ausführungsbeispiel 2

### Herstellung von Devulkanisatcompound

### Bestandteile (theor. Teile)

| | **Rezept 1** | **Rezept 2** |
|---|---|---|
| **Devulkanisat nach Rezept 1** | 100,00 | |
| **Devulkanisat nach Rezept 2** | | 100,00 |
| **Gasphasen-EPDM-80%ig(Binder)** | 9,50 | |
| **Ruß (Luftbinder)** | | 0,40 |
| **NR-Pulver oder NR-Latex (Binder)** | | 6,00 |
| **Mahlschwefel (Vulkanisationsmittel)** | 1,50 | 2,00 |
| **Peroxid 98%ig (Sauerstoffradikalspender)** | 1,00 | 1,00 |
| **Alterungsschutzmittel (Radikalfänger)** | 0,10 | 0,10 |

### Verfahrensablauf :

keine Kühlung und Heizung einstellen
sofern nicht anders angegeben, wird die Drehzahl entsprechend der Ansatzmenge eingestellt (Laboransatz 3000 U/Min; Produktionsansatz 600 U/Min)

| **Arbeitsschritte** | **Temp.** | **Zeit** | **Bemerkungen** |
|---|---|---|---|
| **1**. Devulkanisat nach Rezept. 1 oder 2 und Schwefel in den Heizmischer eingeben | ca. 50°C | 0 Min. | |
| | | | |
| **2.**Rühren mit Höchstgeschwindigkeit (600 bzw. 3000U/Min.) | | | Andockung v. Schwefel an die GK-Obfl. |
| | | | |
| **3.** Zugabe von Bindematerialien, Kaolin, Kieselsäure und Fließmittel | bei 70°C | | |
| | | | |
| **4.**Rühren mit mittl. Geschwindigkeit (600 bzw. 1500 U/Min.) | | | Vermischen/Verteilen |
| | | | |
| **5.** Zugabe von Peroxid und ASM | bei 80°C | | |
| | | | |
| **6.**Rühren mit mittlerer Geschwindigkeit (600 bzw. 1500 U/Min.) | | | Vermischen/Verteilen/ Andocken |
| | | | |
| **7.** Ausstoß des Gemisches in den Kühlmischer | bei 95°C | 10 Min. | |
| | | | |
| **8.** Abkühlung des Gemisches im Kühlmischer | | | |
| | | | |
| **9.** Ausstoß | 45 °C | 6 Min. | Erreichen d. Abpacktemperatur |
| | | | |
| **Gesamtmischzeit** | | **16 Min.** | |

### Charakterisierung des Devulkanisatcompounds

Devulkanisatcompound ist dem Devulkanisat im Aussehen und Verhalten ähnlich. Durch die erhalten gebliebene Rieselfähigkeit ist eine direkte Beschickung über Trichter eines Spritzgußautomaten gewährleistet und bringt dadurch technologische Vorteile.

Nachfolgend sind die physikalischen Prüfergebnisse des EPDM-Gummidevulkanisatcompounds, nach obiger Rezeptur und Verfahren hergestellt, dargestellt:

| Physikalische Parameter | Werte (Basis EPDM) | | Einheit | Norm |
|---|---|---|---|---|
| | SOLL | IST | | |
| Härte | 50 +/- 5 | 50 | Shore A | DIN 53505 |
| Härte nach Luftalterung 168h/ 70°C | + 10 | + 10 | Shore A | DIN 53508 |
| Zugfestigkeit | mind. 7,0 | 12,2 | N/mm² | DIN 53504 |
| Zugfestigkeit nach Luftalterung 168h/ 70°C | bis - 25 % | - 8,8 % | N/mm² | DIN 53508 |
| Bruchdehnung | mind. 400 | 700 | % | DIN 53504 |
| Bruchdehnungnach Luftalterung 168h/ 70°C | bis -35 % | -28 % | % | DIN 53508 |
| Druckverformungsrest (DVR-24 h, 70 °C,25%) | <50 | 34 | % | DIN 53517 |
| Rückprallelastizität | - | 40 | % | DIN 53512 |
| Abrieb | - | 249 | mm² | DIN 53516 |
| Lackindifferenz | leichte KV zulässig | leichte KV | Kontaktverfärbung | N 3810 |
| Lackindifferenz | keine KB zulässig | Keine KB | Koronabildung | N 3810 |
| Physikalische Parameter | Werte (Basis EPDM) | | Einheit | Norm |
| | SOLL | IST | | |
| Lackindifferenz | kein AWE zulässig | kein AWE | Auswascheffekt | N 3810 |
| Ozonbeständigkeit (2ppm, 25°C, 48 h) | keine Risse | keine Risse | | DIN 53509 |
| Kältebeständigkeit (nach 24h Kältlagerung bei - 40°C) | Keine Risse | Keine Risse | | |
| Isolationswiderstand | >10 hoch8 | >10 hoch8 | Ohm | N 67019 DIN 53482 |
| Weiterreißwiderstand | Probekörper B (6,3 +/- 0,3 mm) | 8,5 | N/mm | DIN 53507 |
| PMMA-Indifferenz | keine Risse zulässig | keine Risse | | N 38016 |
| PC-Indifferenz | keine Risse zulässig | keine Risse | | N 38016 |
| Anmerkung: Prüfkörper wurde 10 Minuten bei 158 °C vulkanisiert ! | | | | |
| | | | | |

| Physikalische Parameter | Soll-Werte | IST-Werte Basis: NR/SBR (Altreifen) | Einheit | Norm |
|---|---|---|---|---|
| Härte | - | 65 (60-90) | Shore A | DIN 53505 |
| Zugfestigkeit | - | 11,00 | N/mm² | DIN 53504 |
| Reißdehnung | - | 340 | % | DIN 53504 |
| Druckverformungsrest (DVR) | - | 20 | % | DIN53517 |
| Rückprallelastizität | - | 50 | % | DIN 53512 |
| Abrieb | - | 249 | mm² | DIN 53516 |

Das EPDM-Devulkanisatcompound wurde einer Xenon-Schnellbewitterung nach VW-Prüfnorm 3930 bei folgenden Bedingungen unterzogen:
1. Zeit 1600 Stunden
2. Gleichlauf
3. Schwarzstandadrdtemperatur 65°C
4. 102 :18 Regen
5. relative Luftfeuchte 60- 80%
6. Bestrahlungsstärke 60 W/m²
Testergebnisse:
Heizzeit des Prüfkörpers 10 min
Aussehen der Oberfläche keine Risse, Ruß migriert
Verteiler: keine Risse, Ruß migriert

| | Vor | Nach | Abweichung |
|---|---|---|---|
| Festigkeit (N/mm²) | 9,0 | 7,3 | - 18,9% |
| Rückprallelastizität (%) | 700 | 570 | - 18,6% |
| Dehnung (%) | 44 | 42 | - 4,6 % |
| Härte (ShoreA) | 49 | 54 | + 10,2 % |

### Ausführungsbeispiel 3

| **Herstellung von Devulkanisat für Frischmischung** | |
|---|---|
| **Ausgangsmaterial:** | technologische bedingte EPDM-Gummiabfälle |
| **Zerkleinerung, Partikelgröße:** | 0 bis 400 µm |
| **Devulkanisationschemikalien:** | CBS, Tallöl, Peroxid, Radikalfänger |
| **verwendete Mischvorrichtung:** | Heiz-Kühlmischerkombination (Fa. Hentschel) 240L Gesamt-volumen=160 L Nutzvolumen, 65,- |
| | kg Ansatzgewicht (ca. 0,65 Füllfaktor) |

### Devulkanisatrezepturen:

### Bestandteile (theor. Teile)

| | **Rezept 1** | **Rezept 2** |
|---|---|---|
| **Gummimehl (EPDM)** | 100,00 | |
| **Gummimehl (NR/SBR)** | | 100,00 |
| **Tallöl** | 6,00 | 14,00 |
| **Paraffinöl** | 5,00 | |
| **Benzoesäure** | 0,40 | |
| **Beschleuniger CBS** | 2,50 | 2,50 |
| **Zinkoxid** | 1,50 | 1,50 |
| **Stearinsäure** | 0,70 | 0,70 |
| **Dicumyl-Peroxid** (98%ig) | 1,00 | 1,00 |
| **IPPD** | 0,10 | 0,10 |
| **Carnaubawachs** | 2,00 | 2,00 |

### Verfahrensablauf

keine Kühlung und Heizung einstellen
sofern nicht anders angegeben, wird die Drehzahl entsprechend der Ansatzmenge eingestellt (Laboransatz 3000 U/Min; Produktionsansatz 600 U/Min)

| **Arbeitsschritte** | **Temp.** | **Zeit** | **Bemerkungen** |
|---|---|---|---|
| **1.**Gummimehl, Öle und Benzoesäure in den Heizmischer eingeben | bei 55°C | 0 Min. | |
| | | | |
| **2.**Rühren mit Höchstgeschwindigkeit (600 bzw. 3000 U/Min.) | | | Reaktivitätsreduktion d. GK Auflockerung d. Gummioberfläche |
| | | | |
| **3.** Zugabe von CBS ZnO, KS,Kaolin und Stearinsäure | bei 65°C | | |
| | | | |
| **4.**Rühren mit Höchstgeschwindigkeit (600 bzw. 3000 U/Min.) | | | Andockung |
| | | | |
| **5.** Dann Zugabe von Peroxid | 80°C | | |
| | | | |
| **6.** Langsames Rühren (600 U/Min.) | | | Andockung |
| | | | |
| **7.** Dann Zugabe von IPPD | 90°C | | |
| | | | |
| **8.** Langsames Rühren (600 U/Min.) | | | Andockung |
| | | | |
| **9.**Zugabe von Carnaubawachs | 100°C | | |
| | | | |
| **10.** Sehr langsames Rühren (600 U/Min.) | | | Andockung |
| | | | |
| **11.** Ausstoß in den KÜHLMISCHER | ca.115°C | 10Min. | |
| | | | |
| **12.** Abkühlung des Gemisches im Kühlmischer | | | Reaktionsabbruch |
| | | | |
| **13.** Ausstoß | 45°C | 6 | |
| **Gesamtmischzeit** | | **16 Min.** | |

### Charakterisierung des Devulkanisates

Es entsteht ein rieselfähiges Produkt, welches eine geringe Eigenklebrigkeit besitzt. Diese Klebrigkeit der Partikel untereinander ruft ein typisches Erkennungsbild des Devulkanisates hervor, welches bei Schüttvorgängen durch ein verzögertes Fließen ("Abkriechen") gekennzeichnet ist. Zur Verbesserung der Fließ- bzw. Rieselfähigkeit des Materials wird mit 0,5 - 1,-T1. hochdisperse, hydrophile Kieselsäure und/oder Kaolin, eine wesentliche Verbesserung erreicht. Darüber hinaus wird eventuell vorhandene, störende Feuchtigkeit gebunden.

Nachfolgend sind die Ergebnisse einer Prüfreihe von EPDM-Gummidevulkanisat, nach obigen Rezept und Verfahren hergestellt, als Verschnittkamponente in einer EPDM-Frischmischung in steigender Dosierung im direkten Vergleich dargestellt:

| Physikalische Parameter | Dosier-Varianten | | | |
|---|---|---|---|---|
| | V80/20 (Testmi./DV) | 60/40 (Testmi./D V) | 40/60 (Testmi./DV) | 100 (Testmischung-Basis) |
| Bruchfestigkeit (MPa) | 6,76 | 6,62 | 5,67 | 5,73 |
| Bruchdehnung (%) | 363 | 378 | 377 | 334 |
| Härte (°Shore A) | 62,4 | 60,6 | 57,8 | 60,6 |
| Rückprallelastizität (%) | 34,1 | 36,2 | 35,53 | 31,67 |
| Rheologische Untersuchungen (180 °C) | | | | |
| ML | 9,0 | 9,6 | 11,0 | 7,8 |
| TS2 | 01:17 | 01:21 | 01:39 | 01:43 |
| T50 | 02:11 | 02:20 | 02:47 | 02:52 |
| T90 | 06:08 | 06:59 | 08:11 | 07:13 |
| MH | 28,5 | 25,7 | 24,2 | 24,2 |
| | | | | |
| | Prüfkörper: | T = 180 °C | HZ = 20 Min. | D = 95 Bar |
| | | D = 6mm | | |

### Ausführungsbeispiel 4

### Herstellungsvorschrift für einstufiges DVC:

Es ist möglich Devulkanisatcompound einstufig herzustellen. Bei dieser Verfahrensweise wird der DV-Anteil mit dem DVC-Anteil in einem Mischprozeß vereinigt und der Reaktionsmechanismus der Devulkanisation und Aktivierung der Doppelbindung findet im Ablauf des Vulkanisationprozesses des DVC statt . Entscheidend ist hierbei ein schichtweiser Auftrag der einzelnen Mischungkomponenten bei der Herstellung.

| | |
|---|---|
| **Ausgangsmaterial:** | technologische bedingte EPDM-Gummiabfälle |
| **Zerkleinerung, Partikelgröße:** | 0 bis 400 µm |
| **verwendete Mischvorrichtung:** | Heiz-Kühlmischerkombination (Fa. Henschel) 200L Gesamt-volumen=160 L Nutzvolumen, 65,-kg Ansatzgewicht (ca. 0,65 Füllfaktor) |

### Rezepturen:

### Bestandteile (theor. Teile)

| | **Rezept 1** | **Rezept 2** |
|---|---|---|
| **Gummimehl (EPDM)** | 100,00 | |
| **Gummimehl (NR/SBR)** | | 100,00 |
| **Tallöl** | 6,00 | 14,00 |
| **Paraffinöl** | 5,00 | |
| **Benzoesäure** | 0,40 | |
| **Beschleuniger CBS** | 2,50 | 2,50 |
| **Zinkoxid** | 1,50 | 1,50 |
| **Stearinsäure** | 0,70 | 0,70 |
| **Gasphasen-EPDM-80%ig(Binder)** | 9,50 | |
| **Ruß (Luftbinder)** | | 0,40 |
| **NR-Pulver oder NR-Latex (Binder)** | | 6,00 |
| **Mahlschwefel (Vulkanisationsmittel)** | 1,50 | 2,00 |
| **Peroxid 98%ig (Sauerstoffradikalspender)** | 1,00 | 1,00 |
| **Alterungsschutzmittel IPPD (Radikalfänger)** | 0,10 | 0,10 |

### Verfahrensablauf

| **Arbeitsschritte** | **Temp.** | **Zeit** | **Bemerkungen** |
|---|---|---|---|
| **1.** Gummimehl, Öle und Benzoesäure in den Heizmischer eingeben | ca. 50°C | 0 Min. | |
| | | | |
| **2.** Rühren mit Höchstgeschwindigkeit (600 bzw. 3000 U/Min.) | | | Reaktivitätsreduktion d. GK Auflockerung d. Gummi-oberfläche |
| | | | |
| **3.** Dann Zugabe von Beschleuniger (CBS), ZnO, und Stearinsäure | ca. 65°C | | |
| | | | |
| **4.** Rühren mit Höchstgeschwindigkeit | | | Andockung |
| | | | |
| **5.** Zugabe von Schwefel | ca. 70°C | | |
| | | | |
| **6.** Rühren mit Höchstgeschwindigkeit (600 bzw. 3000 U/Min.) | | | Andockung |
| | | | |
| **7.** Zugabe von Kaolin und Kieselsäure | ca. 75°C | | |
| | | | |
| **8.** Rühren mit Höchstgeschwindigkeit (600 bzw. 3000 U/Min.) | | | Andockung |
| | | | |
| **9.** Zugabe von Bindematerial | ca. 85°C | | |
| | | | |
| **10.** Langsames Rühren (1500 oder 600 U/Min.) | | | Andockung |
| | | | |
| **11.** Zugabe von Peroxid und ASM | ca. 88°C | | |
| | | | |
| **12.** Langsames Rühren (1500 oder 600 U/Min.) | | | Andockung |
| | | | |
| **13.** Ausstoß in den KÜHLMISCHER | ca. 90- 15 Min. 95°C | | |
| | | | |
| **14.** Abkühlung des Gemisches im Kühlmischer | | | Reaktionsabbruch |
| | | | |
| **15.** Ausstoß | ca. 45°C | 8 | |
| | | | |
| **Gesamtmischzeit** | | **23 Min.** | |

### Ausführungsbeispiel 5

Auf Basis Devulkanisat aus EPDM-Abfällen und Frischgummi werden Spritzgussformteile entsprechend nachfolgender Bedingungen hergestellt und miteinander verglichen:

| | Ausgangsmaterial Devulkanisatcompound aus EPDM-Abfällen | Ausgangsmaterial Frischgummi |
|---|---|---|
| -Herstellung von Gehäusen | | |
| -Spritzgießmaschine Werner & Pfleiderer GSP 400 VU | | |
| -Spritzgießwerkzeug mit 6 Kavitäten | | |
| -Punktanguß Dmr. 2,5 mm | | |
| Schussgewicht | 2780 g | 3150 g |
| Schnecken/Zylindertemperatur | 65°C | 65°C |
| Werkzeugtemperatur | 165°C | 175°C |
| Spritzzeit | 40 sec | 40 sec |
| Spritzdruck | 1080 bar | 1080 bar |
| Vulkanisationsdauer | 350 sec | 350 sec |
| Teilebewertung | In Ordnung | In Ordnung |

### Aufstellung der verwendeten Abkürzungen:

| | |
|---|---|
| ASM | Alterungsschutzmittel |
| CBS | N-Cyclohexyl-2-Mercaptobenzothiazolyl-Sulfenamid |
| (Beschleuniger) | |
| DCBS | Di-Cyclohexyl-2-Mercaptobenzothiazolyl-Sulfenamid |
| (Beschleuniger) | |
| DPG | Diphenylguanidin (Beschleuniger) |
| DVR | Druckverformungsrest |
| EPDM | Ethylen-Propylen-Terpolymer (Synthesekautschuk) |
| IPPD | N-Isopropyl-N'-phenyl-p-phenylendiamin (ASM z.B. |
| "4010 NA") | |
| KS | Kieselsäure |
| MBT | 2-Mercaptobenzthiazol (Beschleuniger) |
| NR | Nature-Rubber (Naturkautschuk) |
| SBR | Styrol-Butadien-Rubber (Synthesekautschuk) |
| Thiuram | Tetramethylenthiuramdisulfid (Beschleuniger) |
| Vulkanisationsverzögerer | z.B. Benzoesäure |

### Versuchsergebnisse

| | |
|---|---|
| ML | Low-Mooney (Niedrigste Plastizität oder Spannungswert) |
| TS2 | Vulka.-Zeit nach 2 Einheiten Spannungsanstieg über |
| Minimum | |
| T50 | Vulka.-Zeit für 50 % des Gesamtspannungsanstieges |
| T90 | Vulka.-Zeit für 90 % des Gesamtspannungsanstieges |
| MH | High-Mooney (Höchster Spannungswert des Gummis) |

## Patentansprüche

1. Devulkanisat aus zerkleinerten Gummiabfällen, bei dem die Schwefelbrücken der Oberfläche der zerkleinerten Gummiabfälle gebrochen und für eine neue Vulkanisation aktiviert sind, erhältlich **dadurch**, dass die Gummistruktur der Gummikornoberfläche der zerkleinerten Gummiabfälle angequollen wird und die so vorbehandelten Gummiabfälle mit einem mechano-, chemisch-reduktiv wirkenden Devulkanisationsansatz in einer Heiz-Kühlmischer-Kombination gemischt, dabei durch prozessbedingte Reibungswärme bis auf eine Ausstoßtemperatur von 105 bis 150°C erwärmt und danach sofort abgekühlt werden.

2. Devulkanisat nach Anspruch 1, **dadurch gekennzeichnet, dass** die devulkanisierten Gummiabfälle mit einem Sauerstoffradikalspender zusätzlich aktiviert sind.

3. Devulkanisat nach Anspruch 2, **dadurch gekennzeichnet, dass** als Sauerstoffradikalspender Peroxide eingesetzt werden.

4. Devulkanisat nach Anspruch 2 oder 3, **dadurch gekennzeichnet, dass** die zusätzlich aktivierten und devulkanisierten Gummiabfälle mit einem Radikalfänger versehen sind.

5. Devulkanisatcompound bestehend aus einem Gemisch aus Devulkanisat nach jeweils einem der Ansprüche 1 bis 4 und Vulkanisationsmittel und Bindemittel sowie gegebenenfalls Hilfsmittel.

6. Verfahren zur Herstellung von Devulkanisat aus zerkleinerten Gummiabfällen, **dadurch gekennzeichnet, dass** zur Brechung der Schwefelbrücken der Oberfläche der zerkleinerten Gummiabfälle und deren Aktivierung für eine neue Vulkanisation die Gummistruktur der Gummikornoberfläche der zerkleinerten Gummiabfälle angequollen wird und die so vorbehandelten Gummiabfälle mit einem mechano-, chemisch-reduktiv wirkenden Devulkanisationsansatz in einer Heiz-Kühlmischer-Kombination gemischt, dabei durch prozeßbedingte Reibungswärme bis auf eine Ausstoßtemperatur von 105 bis 150°C erwärmt, und danach sofort abgekühlt werden.

7. Verfahren nach Anspruch 6, **durch gekennzeichnet, dass** zum Anquellen der Gummistruktur der Gummikornoberfläche Tallöl und/oder an die bestehenden Polarität der Elastomerbasis des Gummis angepasste Weichmacheröle und/oder organische Säuren verwendet werden.

8. Verfahren nach Anspruch 6, **dadurch gekennzeichnet, dass** dem Gemisch aus zerkleinerten Gummiabfällen und Devulkanisationsansatz vor Erreichen der Ausstoßtemperatur Sauerstoffradikalspender und gegebenenfalls Radikalfänger zugegeben werden.

9. Verfahren nach Anspruch 6 oder 7, **dadurch gekennzeichnet, dass** der Devulkanisationsansatz aus einem Chemikaliengemisch aus Vulkanisationsaktivator, Vulkanisationsbeschleuniger, Vulkanisationsverzögerer und gegebenenfalls Weichmacheröl besteht.

10. Verfahren nach Anspruch 9, **dadurch gekennzeichnet, dass** als Vulkanisationsbeschleuniger CBS oder MBT/DPG oder DCBS, oder Thiuram und als Vulkanisationsaktivator Zinkoxid in Kombination mit Stearinsäure oder Zinkstearat eingesetzt werden.

11. Verfahren nach Anspruch 9, **dadurch gekennzeichnet, dass** als Vulkanisationsverzögerer Tallöl oder organische Säuren verwendet werden.

12. Verfahren nach Anspruch 8, **dadurch gekennzeichnet, dass** als Sauerstoffradikalspender Peroxid gegebenenfalls in Kombination mit einem Radikalfänger eingesetzt wird.

13. Verfahren zur Herstellung von Devulkanisatcompound, **dadurch gekennzeichnet, dass** nach einem oder mehrerer der Ansprüche 6-12 hergestelltes Devulkanisat, und Vulkanisationsmittel, Bindemittel sowie gegebenenfalls Hilfsmittel so mit einander vermischt werden, dass das Devulkanisatkom mit den Zusätzen gleichmäßig umschlossen wird .

14. Verfahren zur Herstellung von Devulkanisatcompound, **dadurch gekennzeichnet, dass** bei der Herstellung von Devulkanisat nach einem oder mehrerer der Ansprüche 6-12 die Gummistruktur der Gummikornoberfläche der zerkleinerten Gummiabfälle angequollen wird und danach die so vorbehandelten Gummiabfälle schichtweise durch Mischen mit Vulkanisationsbeschleuniger, Vulkanisationsaktivator, Vulkanisationsmittel, Hilfsmittel, Bindemitteln, Sauerstoffradikalspender und -fänger beschichtet werden.

15. Verwendung von Devulkanisat nach jeweils einem oder mehrerer der Ansprüche 1 bis 4 oder 6 bis 12 zur Zumischung zu Frischgummimischungen.

16. Verwendung von Devulkanisatcompound nach Anspruch 5 oder 13 oder 14 zur Herstellung von Spritzgussformteilen.

## Claims

1. Devulcanisation product consisting of disintegrated scrap rubber, where the sulphur bridges of the surface of the disintegrated scrap rubber are broken and reactivated for a new vulcanisation, obtainable by that the rubber structure of the rubber granule surface of the disintegrated scrap rubber is caused to swell, the such pretreated scrap rubber mixed with a mechano-/chemically reductive devulcanisation batch in a combined heating/cooling mixer, thereby heated up to a dump temperature of 105 to 150 °C by process-caused friction heat, then immediately cooled down.

2. Devulcanisation product to claim 1 **characterized by that** the devulcanised scrap rubber is additionally activated by using an oxygen radical donator.

3. Devulcanisation product to claim 2 **characterized by that** peroxides are used as oxygen radical donator.

4. Devulcanisation product to claim 2 or 3 **characterized by that** the additionally activated and devulcanised scrap rubber are provided with a free-radical scavenger.

5. Devulcanisation product compound consisting of a mixture of devulcanisation product to any of the claims 1 to 4 and vulcanising agent and binder and, if needed, auxiliary agent.

6. Method for producing devulcanisation product from disintegrated scrap rubber **characterized by that** for breaking the sulphur bridges of the surface of the disintegrated scrap rubber and reactivating them for a new vulcanisation the rubber structure of the rubber granule surface of the disintegrated scrap rubber is caused to swell and the such pretreated scrap rubber mixed with a mechano-/chemically reductive devulcanisation batch in a combined heating/cooling mixer, heated up to a dump temperature of 105 to 150 °C by process-caused friction heat, then immediately cooled down.

7. Method to claim 6 **characterized by that** for swelling the rubber structure of the rubber granule surface tall oil and/or plasticizing oils adapted to the present polarity of the elastomer base of the rubber and/or organic acids are used.

8. Method to claim 6 **characterized by that** before the dump temperature has been reached, oxygen radical donator and, if needed, free-radical scavenger are added to the mixture of disintegrated scrap rubber and devulcanisation batch.

9. Method to claim 6 or 7 **characterized by that** the devulcanisation batch consists of a chemical mixture of vulcanisation activator, vulcanisation accelerator, vulcanisation retarder and, if needed, plasticizing oil.

10. Method to claim 9 **characterized by that** CBS (N-cyclohexyl-2-mercaptobenzothiazolyl-sulphenamide) or MBT/DPG (2-mercaptobenzothiazol/diphenylguadinine) or DCBS (Di-cyclohexyl-2-mercaptobenzothiazolyl-sulphenamide), or thiuram (tetramethylenethiuramdisulphide) are used as vulcanisation accelerator and zinc oxide in combination with stearic acid or zinc stearate used as vulcanisation activator.

11. Method to claim 9 **characterized by that** tall oil or organic acids are used as vulcanisation retarder.

12. Method to claim 8 **characterized by that** peroxide, if needed, in combination with a free-radical scavenger is used as oxygen radical donator.

13. Method for producing devulcanisation compound **characterized by that** devulcanisation product produced to one or several of the claims 6 to 12 and vulcanising agent, binder and, if needed, auxiliary agent are mixed with each other such that the devulcanisation product granule is homogeneously enclosed by the additive substances.

14. Method for producing devulcanisation compound **characterized by** that during producing devulcanisation product to one or several of the claims 6 to 12 the rubber structure of the rubber granule surface of the disintegrated scrap rubber is caused to swell and the such pretreated scrap rubber is coated in layers by mixing with vulcanisation accelerator, vulcanisation activator, vulcanising agent, auxiliary agent, binders, oxygen radical donator and free-radical scavenger.

15. Use of devulcanisation product produced to respectively one or several claims 1 to 4 or 6 to 12 for admixing same to fresh rubber mixtures.

16. Use of devulcanisation compound produced to claim 5 or 13 or 14 for producing injection molded parts.

## Revendications

1. Produit de dévulcanisation constitué de déchets de caoutchouc broyés, dans lequel les ponts de soufre de la surface des déchets de caoutchouc broyés ont été coupés et sont activés pour une nouvelle vulcanisation, pouvant être obtenu en ce que la structure de caoutchouc de la surface des granules de caoutchouc des déchets de caoutchouc broyés est gonflée et en ce que les déchets de caoutchouc ainsi pré-traités sont mélangés à une préparation de dévulcanisation agissant de façon réductrice par voie mécanique et chimique dans un mélangeur combiné à chaud - à froid, sont à cet effet chauffés par la chaleur de frottement dépendant du procédé jusqu'à une température d'éjection de 105 à 150 °C, puis immédiatement refroidis.

2. Produit de dévulcanisation selon la revendication 1, **caractérisé en ce que** les déchets de caoutchouc dévulcanisés sont en outre activés avec un donneur ou fournisseur de radicaux d'oxygène.

3. Produit de dévulcanisation selon la revendication 2, **caractérisé en ce que** l'on utilise des peroxydes en tant que donneurs de radicaux d'oxygène.

4. Produit de dévulcanisation selon la revendication 2 ou 3, **caractérisé en ce que** les déchets de caoutchouc en outre activés et dévulcanisés sont pourvus d'un piégeur de radicaux.

5. Composite de dévulcanisation composé d'un mélange du produit de dévulcanisation selon respectivement l'une des revendications 1 à 4 et d'agents de vulcanisation et de liants, ainsi qu'éventuellement d'agents auxiliaires.

6. Procédé de fabrication d'un produit de dévulcanisation constitué de déchets de caoutchouc broyés, **caractérisé en ce que** pour rompre les ponts de soufre de la surface des déchets de caoutchouc broyés et les activer pour une nouvelle vulcanisation, la structure de caoutchouc de la surface des granules de caoutchouc des déchets de caoutchouc broyés est gonflée et les déchets de caoutchouc ainsi pré-traités sont mélangés à une préparation de dévulcanisation agissant de façon réductrice par voie mécanique et chimique dans un mélangeur combiné à chaud - à froid, sont à cet effet chauffés par la chaleur de frottement dépendant du procédé jusqu'à une température d'éjection de 105 à 150 °C, puis immédiatement refroidis.

7. Procédé selon la revendication 6, **caractérisé en ce que,** pour le gonflement de la structure de caoutchouc de la surface des granules de caoutchouc des déchets, on utilise de la résine liquide et/ou des huiles plastifiantes adaptées à la polarité existante de la base élastomère du caoutchouc et/ou des acides organiques.

8. Procédé selon la revendication 6, **caractérisé en ce que** l'on ajoute au mélange constitué de déchets de caoutchouc broyés et de la préparation de dévulcanisation, avant d'atteindre la température d'éjection, des donneurs de radicaux d'oxygène et éventuellement des piégeurs de radicaux.

9. Procédé selon la revendication 6 ou 7, **caractérisé en ce que** la préparation de dévulcanisation se compose d'un mélange de produits chimiques composé d'un activateur de vulcanisation, d'un accélérateur de vulcanisation, d'un retardateur de vulcanisation et éventuellement d'une huile plastifiante.

10. Procédé selon la revendication 9, **caractérisé en ce que** l'on utilise en tant qu'accélérateur de vulcanisation du CBS ou du MBT/DPG ou du DCBS ou du thiurame, et en tant qu'activateur de vulcanisation de l'oxyde de zinc en combinaison avec de l'acide stéarique ou du stéarate de zinc.

11. Procédé selon la revendication 9, **caractérisé en ce que** l'on utilise en tant que retardateur de vulcanisation de la résine liquide ou des acides organiques.

12. Procédé selon la revendication 8, **caractérisé en ce que** l'on utilise du peroxyde en tant que donneur de radicaux d'oxygène, éventuellement en combinaison avec un piégeur de radicaux.

13. Procédé de fabrication d'un composite de dévulcanisation, **caractérisé en ce que** le produit de dévulcanisation fabriqué selon une ou plusieurs des revendications 6 à 12, et des agents de dévulcanisation, des liants et éventuellement des agents auxiliaires, sont mélangés ensemble de façon telle que le grain ou granulé de produit de dévulcanisation est enveloppé de façon régulière ou homogène par les additifs.

14. Procédé de fabrication d'un composite de dévulcanisation, **caractérisé en ce que** lors de la fabrication du produit de dévulcanisation selon une ou plusieurs des revendications 6 à 12, la structure de caoutchouc de la surface des grains ou granulés de caoutchouc des déchets de caoutchouc broyés est gonflée et ensuite, les déchets de caoutchouc ainsi pré-traités sont enduits, par couches, en les mélangeant avec l'accélérateur de vulcanisation, l'activateur de vulcanisation, l'agent de vulcanisation, l'agent auxiliaire, les liants, les donneurs de radicaux d'oxygène et les piégeurs de radicaux.

15. Utilisation d'un produit de dévulcanisation selon respectivement une ou plusieurs des revendications 1 à 4 ou 6 à 12 pour un ajout en mélange à des mélanges de caoutchouc frais ou neuf.

16. Utilisation d'un composite de dévulcanisation selon la revendication 5 ou 13 ou 14 pour la fabrication de pièces moulées par injection.
